# EUROPÄISCHE PATENTSCHRIFT

(11) **EP 1 337 462 B1**
(45) Veröffentlichungstag und Bekanntmachung des Hinweises auf die Patenterteilung: **23.01.2008**
(21) Anmeldenummer: 01999528.1
(22) Anmeldetag: 06.11.2001
(51) Int. Cl.: C01B 33/02, C01B 33/027, B05B 17/06

(54) **VERFAHREN UND VORRICHTUNG ZUR ERZEUGUNG GLOBULÄRER KÖRNER AUS REINST-SILIZIUM MIT DURCHMESSERN VON 50 µm BIS 300 µm UND IHRE VERWENDUNG**
METHOD AND DEVICE FOR PRODUCING GLOBULAR GRAINS OF HIGH-PURITY SILICON HAVING A DIAMETER OF BETWEEN 50 µm AND 300 µm, AND USE OF THE SAME
PROCEDE ET DISPOSITIF POUR REALISER DES GRAINS GLOBULAIRES DE SILICIUM ULTRA PUR DE DIAMETRE VARIANT ENTRE 50 µm ET 300 µm, ET LEUR UTILISATION

(30) Priorität: 30.11.2000 DE 10059594
(43) Veröffentlichungstag der Anmeldung: 27.08.2003
(73) Patentinhaber: SOLARWORLD AKTIENGESELLSCHAFT, 53113 Bonn (DE)
(72) Erfinder: BLOCK, Hans-Dieter, 51381 Leverkusen (DE); KRÄUTER, Udo, 51375 Leverkusen (DE); SCHRECKENBERG, Peter, 28277 Bremen (DE)
(74) Vertreter: Rau, Albrecht
(86) Internationale Anmeldenummer: PCT/EP2001/012804
(87) Internationale Veröffentlichungsnummer: WO 2002/046097

(56) Entgegenhaltungen:
- EP-A- 0 308 933
- DE-A- 2 656 330
- DE-A- 3 342 496
- US-A- 4 818 495
- US-A- 4 883 687

## Beschreibung

Die vorliegende Erfindung betrifft ein Verfahren und eine Vorrichtung zur Herstellung globulärer Körner von Reinst-Silizium mit Durchmessern von 50 µm bis 300 µm sowie die Verwendung derselben als Saatgut für die Abscheidung von Reinst-Silizium aus Silan in einem Wirbelbett.

Für die Erzeugung von Reinst-Silizium hat sich die thermische Zersetzung von Silan (SiH₄) an Reinst-Silizium-Saatkörnern im Wirbelbett als ein besonders günstiges Verfahren erwiesen. Bei diesem Prozess wächst das abgeschiedene Silizium auf die Saatkörner auf und vergrößert dieselben. Dieser Vorgang kann ansatzweise oder auch kontinuierlich ausgeführt werden, wobei die Anzahl entnommener Endprodukt-Partikeln durch Zufuhr neuer Saatpartikeln aus Reinst-Silizium ersetzt werden muss. Als Endprodukt des Silan-Zersetzungsprozesses werden zumeist Reinst-SiliziumKörner mit Durchmessern von 0,3 mm bis 3 mm gewünscht, da diese Größe besonders gut zum Dosieren und Aufschmelzen geeignet ist. Daraus folgt, dass die einzusetzenden Saatpartikeln eine Größe unterhalb von 0,3 mm, vorzugsweise bis zu einer Größenordnung kleiner als der Durchmesser des gewünschten Endproduktes, aufweisen sollten, einerseits um das Verhältnis Endprodukt : Saatgut möglichst günstig (also möglichst groß) zu gestalten, andererseits um den Austrag als Feinkorn aus dem Wirbelbett klein zu halten. Anzustreben ist also ein Größenbereich der Saatpartikeln von 50 µm bis 300 µm.

Solche Saatpartikeln können beispielsweise durch Zerkleinern, insbesondere durch Brechen oder Mahlen von Reinst-Silizium beliebiger Form und Herkunft auf die erforderliche Größe gewonnen werden. In der Patentliteratur sind verschiedene Verfahren zur mechanischen Zerkleinerung von Reinst-Silizium beschrieben:

Es sind Verfahren zu Zerkleinerung von Reinst-Silizium in Strahlmühlen bekannt (DE 42 40 749 A1, US-PS 4,424,199). Diese Verfahren weisen eine hohe Reinheit des Endproduktes auf. Die Zerkleinerung ist aber sehr unspezifisch, so dass noch ein hoher Anteil von Partikelmaterial unterhalb der gewünschten Untergrenze von 50 µm entsteht. Dieses Material ist nicht nutzbar, es stellt einen Verlust dar.

Auch ist die Zerkleinerung von Reinst-Silizium in einem Walzenstuhl bekannt. Der Walzenstuhl ist von den mechanischen Zerkleinerungsorganen für die Aufgabe am besten geeignet. Das Partikelgrößenspektrum des Produktes kann sehr gut auf die Zielgröße eingestellt werden. Problematisch ist aber die Verunreinigung des Endproduktes durch Metallabrieb von der Oberfläche der Mühle. Nur mit aufwendigen Reinigungsverfahren (DE 195 29 518 A1, JP 6-144 822-A) kann das Silizium von dem Metallabrieb befreit werden. Als Alternative wurde eine Mühle mit einer Siliziumwalze in der JP 58-145 611-A beschrieben. Nachteil dieser Konstruktion ist, dass durch die Sprödigkeit der Silizium-Walze keine ausreichende technische Verfügbarkeit der Anlage gewährleistet werden kann.

Auch sind in der Patentliteratur noch verschiedene weitere Verfahren zur Keimpartikelerzeugung beschrieben: Beschuss eines Reinst-Silizium-Targets mit Silizium-partikeln (LTS-PS 4,691,866), Mikrowellenzerkleinerung von Reinst-Silizium-Stäben (US-PS 4,565,913), Elektromechanische Zerkleinerung von Silizium-Stäben (DE 195 41 539 A1), Zerkleinerung durch elektrische Entladung (WO 98/07520, DE 195 34 232 A1). Alle Verfahren haben den Nachteil, dass sie sehr unspezifisch zerkleinern, so dass größere Mengen an nicht verwendbarem Feingut entstehen.

Neben dem Zerkleinern von festem Reinst-Silizium ist auch die Zerstäubung einer Reinst-Silizium-Schmelze ein gangbarer Weg zu kleinen Reinst-Silizium-Partikeln. Jedoch ist die gängige Methode der Zerstäubung einer aus einer Düse auslaufenden Reinst-Silizium-Schmelze mit einem seitlich auftreffenden Gasstrahl unwirtschaftlich, da sehr lange Abkühlstrecken benötigt werden. Diese führen zu sehr großen Apparateabmessungen, die einerseits hohe Investitionen hervorrufen, andererseits nur sehr aufwendig an die geforderten Reinheitsansprüche anzupassen sind.

Die Zerstäubung eines Strahls eines flüssigen Stoffs, vorzugsweise eines geschmolzenen Metalls, wobei der Strahl durch ein Ultraschallfeld geleitet wird, insbesondere innerhalb eines verdichteten gasförmigen Mediums durch das Ultraschallfeld hindurchgeleitet wird, ist für sich bekannt (DE 37 35 787 C2). Doch entstehen bei diesem bekannten Verfahren globuläre Körner im Durchmesser-Bereich um 0,1 um und darunter. Des Weiteren ist nach dem Stand der Technik in den Apparaturen die geforderte Reinheit der Reinst-Silizium-Saatpartikeln nicht erreichbar.

Aus der DE 26 56 330 A1 sind ein Verfahren und eine Vorrichtung zur Zerstäubung einer Metallschmelze in einem stehenden Ultraschallfeld bekannt. Die Schmelze wird in einem Feldknoten der Ultraschallwellen zerstäubt. Das Ultraschallfeld wird durch einen Ultraschallsender und einen dem Ultraschallsender zugeordneten Ultraschallreflektor gebildet. Zwischen dem Sender und dem Reflektor liegt ein Abstand von mehreren Schallwellenlängen vor. Der Zerstäubungs-Vorgang wird in einer Kammer mit inerter Atmosphäre durchgeführt.

Der Erfindung liegt daher die Aufgabe zugrunde, ein Verfahren und eine Vorrichtung zur Herstellung von Saatpartikeln passender Größe anzugeben, bei dem es möglich ist, ohne Gefahr des Eintrags unerwünschter Verunreinigungen und ohne nennenswerte Stoffverluste Saatpartikel aus Reinst-Silizium beliebiger Herkunft und Größenverteilung zu erzeugen.

Dazu wird ein Verfahren vorgeschlagen, bei dem die Schmelze oberhalb eines Feldknotens in das Ultraschallfeld aufgegeben wird, das zerstäubte Silizium das Ultraschallfeld mit einer Temperatur nahe des Liquiduspunktes verlässt, so dass die erstarrten globulären Körner im wesentlichen eine Korngröße von 50 µm bis 300 um erhalten. Das Hitzeschild schirmt hierbei den beheizten Bereich vom Ultraschallfeld ab und verhindert so, dass dieser durch das Ultraschallfeld abgekühlt wird.

Erfindungsgemäß können derartige Reinst-Silizium Saatpartikeln durch Aufschmelzen und Zerstäuben in einem Ultraschallfeld ohne Kontakt mit Fremdstoffen unter Einwirkung starker mechanischer Kräfte und ohne großen Anfall von Partikeln unerwünschter und unbrauchbarer Größe erzeugt werden.

Durch das erfindungsgemäße Verfahren ist es mit dem Halbmetall Silizium möglich, Partikeln mit 50 µm bis 300 µm Durchmesser zu erzeugen. Es treten keine relevanten Mengen an Feinanteil unterhalb von 50 µm auf. Die Partikeln liegen kugelförmig in der gewünschten Reinheit vor.

Als Inertgas werden bevorzugt hochreine Gase wie beispielsweise Wasserstoff, Edelgas (Argon) oder Stickstoff eingesetzt. Der Gasdruck im Reaktionsraum beträgt vorzugsweise mindestens 2 bis 40 bar, besonders bevorzugt 10 bar.

Schließlich schützt die Erfindung eine Verwendung des gemäß dem erfindungsgemäßen Verfahren oder mit der erfindungsgemäßen Vorrichtung erzeugten Produkts als Saatpartikeln zur Herstellung von hochreinem Silizium aus Silan in einem Wirbelbett, da die der unter Druck betriebene Ultraschall-Zerstäubungseinrichtung entnommenen Reinst-Silizium-Partikeln als solche ohne weitere Nachbehandlungsmaßnahmen zu diesem Zweck einsetzbar sind. Diese Partikeln zeichnen sich durch globuläre Formen, durch kristalline Struktur und hohe Reinheit aus und sind somit besser als bekannte Partikeln als Saatpartikel in Reinst-Silizium-Abscheideprozess geeignet. Selbstverständlich kann gewünschtenfalls eine weitere Klassierung oder sonstige Eingrenzung der Korngröße vor einem Einsatz vorgenommen werden.

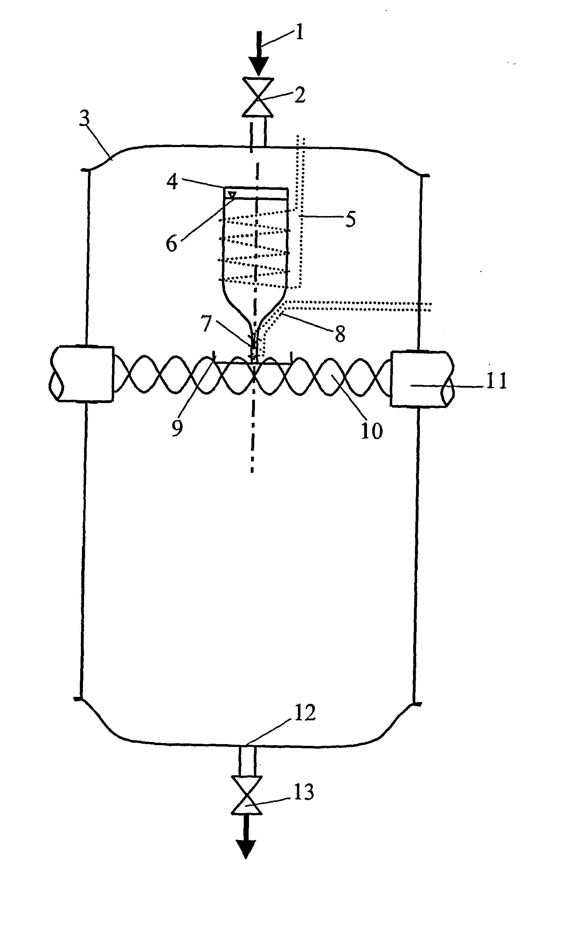

Die Erfindung ist nachfolgend anhand einer ein bevorzugtes Ausführungsbeispiel darstellenden Zeichnung näher erläutert. In der einzigen Figur ist schematisch der apparative Aufbau einer erfindungsgemäßen Vorrichtung dargestellt.

Silizium 1 gelangt über eine geeignete Eintragvorrichtung, im Beispiel ein Feststoffventil 2, kontinuierlich oder diskontinuierlich in einen in einem Druckbehälter 3 befindlichen Schmelztiegel 4. Das Feststoffventil 2 und die nicht näher dargestellten Zuleitungen sind so ausgeführt, dass keine Kontamination des Siliziums 1 stattfinden kann. Im Schmelztiegel 4, der vorzugsweise aus Graphit oder Siliziumcarbid (SiC) besteht oder einen Liner aus Quarzglas hat, wird das Silizium 1 mit Hilfe einer Heizung 5 aufgeschmolzen. Der Druck oberhalb der Schmelzeoberfläche entspricht mindestens dem Druck im Inneren des Druckbehälters 3 und liegt vorzugsweise zwischen 2 und 40 bar.

Der Druckbehälter 3 ist mit hochreinem Gas, vorzugsweise Wasserstoff, Edelgas (Argon) oder Stickstoff, gefüllt, damit eine Kontamination des Siliziums ausgeschlossen werden kann. Das mittlerweile als Schmelze 6 vorliegende Silizium läuft durch eine Kapillare 7 aus dem Schmelztiegel 4 aus. Die Kapillare 7 besteht vorzugsweise aus Graphit oder SiC, sie wird mit einer Heizung 8 auf einer Temperatur oberhalb der Schmelztemperatur des Siliziums gehalten. Die Heizspirale der Heizung 8 ist mit einem Hitzeschild 9 versehen. Der Hitzeschild 9 besteht aus einem Material, welches keine Verunreinigungen im Silizium erzeugt, vorzugsweise aus Graphit oder SiC. Die Heizung 8 schützt die Kapillare 7 vor dem Einfrieren, der Hitzeschild 9 verringert die Abkühlung durch das Ultraschallfeld 10 und verhindert den Kontakt zwischen Schmelzetropfen und Heizspirale.

Der aus der Kapillaren 7 auslaufende Schmelzestrahl fließt direkt in einen Feldknoten des Ultraschallfeldes 10. An dieser Stelle wird die Schmelze 6 zerstäubt. Das Ultraschallfeld 10 wird von vorzugsweise zwei in der Verwendung des Druckbehälters 3 diametral gegenüberliegenden Sonotroden 11 erzeugt. Die Schallfrequenz liegt zwischen 5 und 30 kHz, vorzugsweise bei 20 kHz. Die Sonotroden 11 werden im Resonanzbetrieb betrieben. Der Abstand der Sonotroden 11 sollte so weit gewählt werden, dass die Schmelzetropfen nicht mehr im flüssigen Zustand an die Sonotroden 11 gelangen können, vorzugsweise sollte der Abstand größer als neun Feldknoten betragen. Zur Vermeidung von Kontaminationen durch die Sonotroden 11 können diese, vorzugsweise mit SiC, beschichtet werden. Das zerstäubte Silizium kühlt im Ultraschallfeld 10 sehr schnell ab. Die Abmessungen des Druckbehälters 3 werden so gewählt, dass das zerstäubte Silizium dessen Wände erst im erstarrten Zustand erreicht.

Um eine Kontamination des Siliziums durch Berührung mit dem Mantel des Druckbehälters 3 zu vermeiden, werden die Wände durch Liner aus Graphit oder Quarzglas oder durch eine geeignete Beschichtung, wie beispielsweise SiC oder entsprechende Auskleidungen abgeschirmt. Der Boden des Druckbehälters 3 ist so geformt, dass die Siliziumpartikeln zu einem Auslauf 12 gelangen. Über eine Austragsvorrichtung 13, ein geeignetes Ventil oder eine Zellenradschleuse, werden die Siliziumpartikeln kontinuierlich oder diskontinuierlich aus dem Druckbehälter 3 ausgeschleust.

Die erfindungsgemäße Vorrichtung unterscheidet sich von der in der Patentschrift DE 37 35 787 C2 vorliegenden Konstruktion dadurch, dass die Auslauföffnung des Schmelzestrahles (Spitze der Kapillare 7) sehr nah, bevorzugt < 50 mm, an den mittleren Feldknoten des Ultraschallfeldes 10 positioniert werden kann. Dazu ist, wie erwähnt, die weitere Heizung 8 der Kapillaren 7 sowie der Hitzeschild 9 aus Graphit notwendig. Auf eine seitliche Eindüsung von Gas an den Schmelzestrahl wird verzichtet. Das zerstäubte Silizium verlässt das Ultraschallfeld 10 mit einer Temperatur nahe des Liquiduspunktes. Die Sonotroden 11 müssen in einem sehr weiten Abstand zueinander, vorzugsweise größer als neun Feldknoten, angebracht werden. Zur Vermeidung von Verunreinigungen des Siliziums können die Sonotroden 11 mit SiC beschichtet werden. Das zerstäubte Silizium ist wesentlich gröber als das nach dem Stand der Technik erzeugbare Material.

## Patentansprüche

1. Verfahren zur Erzeugung globulärer Körner aus Reinst-Silizium mit folgenden Verfahrensschritten:
a) Vorsehen eines Ultraschallfeldes (10), welches vom geheizten Bereich einer Siliziumschmelze (6) durch einen Hitzeschild (9) getrennt ist,
b) Zerstäuben der Siliziumschmelze (6) im Ultraschallfeld (10) innerhalb eines mit Inertgas gefüllten und unter Druck stehenden Raumes, wobei die Schmelze oberhalb eines Feldknotens in das Ultraschallfeld (10) aufgegeben wird,
c) Ausleiten des zerstäubten Siliziums aus dem Ultraschallfeld (10) mit einer Temperatur nahe des Liquiduspunktes, sodass die erstarrten globulären Körner im Wesentlichen eine Korngröße von 50 µm bis 300 µm erhalten.

2. Verfahren nach Anspruch 1, **dadurch gekennzeichnet, dass** als Inertgas hochreine Gase wie beispielsweise Wasserstoff, Edelgas (Argon) oder Stickstoff eingesetzt werden.

3. Verfahren nach Anspruch 1 oder 2, **dadurch gekennzeichnet, dass** der Gasdruck innerhalb des Raumes 2 bis 40 bar beträgt.

4. Verfahren nach Anspruch 3, **dadurch gekennzeichnet, dass** der Gasdruck innerhalb des Raumes 10 bar beträgt.

5. Verfahren nach einem der Ansprüche 1 bis 4, **dadurch gekennzeichnet, dass** der Betrieb der Sonotroden (11) im Resonanzbetrieb erfolgt.

6. Verfahren nach einem der Ansprüche 1 bis 5, **dadurch gekennzeichnet, dass** die Schallfrequenz des Ultraschallfeldes (10) zwischen 5 kHz und 30 kHz beträgt.

7. Verfahren nach Anspruch 6, **dadurch gekennzeichnet, dass** die Schallfrequenz des Ultraschallfeldes (10) 20 kHz beträgt.

8. Vorrichtung zur Erzeugung globulärer Körner aus Reinst-Silizium durch Zerstäuben einer Siliziumschmelze in einem Ultraschallfeld innerhalb eines Inertgas gefüllten und unter Druck stehenden Behälters, in dem sich ein Tiegel zum Schmelzen des Siliziums sowie Sonotroden zur Erzeugung eines Schallfeldes befinden, insbesondere gemäß dem Verfahren nach einem der Ansprüche 1 bis 7, **dadurch gekennzeichnet, dass** die Aufgabe der Schmelze in das Ultraschallfeld (10) durch eine Kapillare (7) erfolgt, der beheizte Bereich vom Ultraschallfeld (10) durch einen Hitzeschild (9) getrennt ist, und alle möglichen Kontaktflächen der globulären Körner im Druckbehälter (3) aus nicht kontaminierendem Material bestehen, mit einem Liner aus nicht kontaminierendem Material ausgekleidet sind oder mit nicht kontaminierendem Material beschichtet sind.

9. Vorrichtung nach Anspruch 8, **dadurch gekennzeichnet, dass** das Ultraschallfeld (10) durch mindestens zwei Sonotroden (11) erzeugt wird, die einen Mindestabstand von neun Feldknoten zueinander haben.

10. Vorrichtung nach Anspruch 8 oder 9, **dadurch gekennzeichnet, dass** die Kapillare (7) einen Abstand von maximal 50 mm zu einem Feldknoten des Ultraschallfeldes (10) hat.

11. Vorrichtung nach einem der Ansprüche 8 bis 10, **dadurch gekennzeichnet, dass** die Kapillare (7) mit einer zusätzlichen Heizvorrichtung (8) versehen ist.

12. Vorrichtung nach einem der Ansprüche 8 bis 11, **dadurch gekennzeichnet, dass** der Abstand der Wandungen des Druckbehälters (3) zum Zerstäubungsbereich so gewählt wird, dass die globulären Körner vollständig erstarrt sind, bevor sie auf die besagten Wandungen treffen.

13. Vorrichtung nach Anspruch 8 bis 12, **dadurch gekennzeichnet, dass** als nicht kontaminierendes Material Graphit, Siliziumcarbid oder Quarzglas verwendet wird.

14. Vorrichtung nach einem der Ansprüche 8 bis 13, **dadurch gekennzeichnet, dass** das Silizium dem beheizten Schmelztiegel (4) durch ein Feststoffventil (2) zugeführt wird.

15. Vorrichtung nach Anspruch 8 bis 14, **dadurch gekennzeichnet, dass** der Boden des Druckbehälters (3) zum Austrag des Reinst-Siliziums mit einer Austragsvorrichtung (13) versehen ist

16. Vorrichtung nach Anspruch 15, **dadurch gekennzeichnet, dass** als Austragsvorrichtung (13) eine Zellenradschleuse vorhanden ist.

17. Verwendung des gemäß dem Verfahren nach einem der Ansprüche 1 bis 7 oder mit der Vorrichtung nach einem der Ansprüche 8 bis 16 erzeugten Produkts als Saatpartikeln zur Herstellung von hochreinem Silizium aus Silan in einem Wirbelbett.

## Claims

1. A method for producing globular grains of high-purity silicon, comprising the following steps:
a) providing an ultrasonic field (10) which is heat-insulated from the heated portion of a silicon melt (6) by a heat shield (9);
b) atomising the silicon melt (6) in an ultrasonic field inside (10) a pressurised chamber filled with inert gas, wherein the melt is fed into said ultrasonic field (10) above a field node;
c) leading the atomised silicon out of the ultrasonic field (10) at a temperature near the liquefaction point so that the solidified globular grains essentially adopt a grain size of between 50 µm and 300 µm.

2. A method according to Claim 1, **characterised in that** high-purity gases such as hydrogen, rare gas (argon) or nitrogen are used as inert gas.

3. A method according to Claim 1 or 2, **characterised in that** the gas pressure within the chamber amounts to 2 to 40 bar.

4. A method according to Claim 3, **characterised in that** the gas pressure within the chamber amounts to 10 bar.

5. A method according to any one of Claims 1 to 4, **characterised in that** the sonotrodes (11) are resonance-operated.

6. A method according to any one of Claims 1 to 5, **characterised in that** the sonic frequency of said ultrasonic field (10) ranges between 5 kHz and 30 kHz.

7. A method according to Claim 6, **characterised in that** the sonic frequency of said ultrasonic field (10) amounts to 20 kHz.

8. A device for producing globular grains of high-purity silicon by atomising a silicon melt in an ultrasonic field inside a pressurised vessel filled with inert gas, said vessel containing a pot for melting said silicon and sonotrodes for producing a sonic field, particularly in accordance with the method according to any one of Claims 1 to 7, **characterised in that** the melt is fed into said ultrasonic field (10) through a capillary tube (7), that the heated portion is heat-insulated from said ultrasonic field (10) by a heat shield (9), and that all surfaces which might come into contact with the globular grains in said pressure vessel (3) consist of a non-contaminating material or are coated with a liner made of a non-contaminating material or are coated with a non-contaminating material.

9. A device according to Claim 8, **characterised in that** said ultrasonic field (10) is generated by at least two sonotrodes (11) being arranged at a minimum distance of nine field nodes between each other.

10. A device according to Claim 8 or 9, **characterised in that** said capillary tube (7) has a maximum distance of 50 mm from one field node of said ultrasonic field (10).

11. A device according to any one of Claims 8 to 10, **characterised in that** said capillary tube (7) is provided with an additional heating means (8).

12. A device according to any one of Claims 8 to 11, **characterised in that** the distance from the walls of said pressure vessel (3) to the atomisation zone is chosen so that the globular grains are completely solidified before they hit said walls.

13. A device according to any one of Claims 8 to 12, **characterised in that** graphite, silicon carbide or quartz glass are used as non-contaminating material.

14. A device according to any one of Claims 8 to 13, **characterised in that** the silicon is fed into said heated melting pot (4) via a solid matter valve (2).

15. A device according to any one of Claims 8 to 14, **characterised in that** the bottom of said pressure vessel (3) is provided with a discharge means (13) for discharging the high-purity silicon.

16. A device according to Claim 15, **characterised in that** a cellular wheel sluice is provided as discharge means (13).

17. Utilisation of the product produced according to any one of Claims 1 to 7 or using the device according to any one of Claims 8 to 16 as seed particles for producing high-purity silicon from silane in a fluid bed.

## Revendications

1. Procédé pour réaliser des grains globulaires de silicium ultra pur avec les phases de fabrication suivantes :
a) Prévision d'un champ ultrasons (10) séparé de la zone chauffée d'une masse fondue de silicium (6) par un bouclier thermique (9),
b) Atomisation de la masse fondue de silicium (6) dans le champ ultrasons (10) à l'intérieur d'une chambre remplie de gaz inerte et mise sous pression, où la masse fondue est insérée dans le champ ultrasons (10) au-dessus d'un noeud,
c) Extraire le silicium atomisé du champ ultrasons (10) avec une température proche du point liquidus, de sorte que les grains globulaires solidifiés aient essentiellement un diamètre variant entre 50 µm et 300 µm.

2. Procédé selon la revendication 1, **caractérisé en ce que** comme gaz inerte, on utilise des gaz ultra purs tels que l'oxygène, du gaz rare (argon) ou de l'azote.

3. Procédé selon la revendication 1 ou 2, **caractérisé en ce que** la pression de gaz à l'intérieur de la chambre est de 2 à 40 bars.

4. Procédé selon la revendication 3, **caractérisé en ce que** la pression de gaz à l'intérieur de la chambre est de 10 bars.

5. Procédé selon l'une des revendications 1 à 4, **caractérisé en ce que** les sonotrodes (11) fonctionnement par résonance.

6. Procédé selon l'une des revendications 1 à 5, **caractérisé en ce que** la fréquence ultrason du champ ultrason (10) est de 5 kHz à 30 kHz.

7. Procédé selon la revendication 6, **caractérisé en ce que** la fréquence ultrason du champ ultrason (10) est de 20 kHz.

8. Dispositif pour réaliser des grains globulaires de silicium ultra pur par atomisation d'une masse fondue de silicium dans un champ ultrasons à l'intérieur d'un récipient rempli de gaz inerte et mis sous pression, dans lequel se trouvent un creuset pour la fusion du silicium ainsi que des sonotrodes pour réaliser un champ sonore, en particulier conformément au procédé selon l'une des revendications 1 à 7, **caractérisé en ce que** l'insertion de la masse fondue dans le champ ultrason (10) se fait par une capillaire (7), **en ce que** la zone chauffée du champ ultrason (10) est séparée par un bouclier thermique (9) et **en ce que** toutes les surfaces de contact possibles des grains globulaires dans le ballon à pression (3), sont constituées d'un matériau non contaminant, recouvertes d'une peau en matériau non contaminant ou enduit d'un matériau non contaminant.

9. Dispositif selon la revendication 8, **caractérisé en ce que** le champ ultrasons (10) est produit par au moins deux sonotrodes (11), distantes L'une de l'autre d'au moins 9 noeuds.

10. Dispositif selon la revendication 8 ou 9, **caractérisé en ce que** la capillaire (7) est à une distance maximum de 50 mm d'un noeud du champ ultrasons (10).

11. Procédé selon l'une des revendications 8 à 10, **caractérisé en ce que** la capillaire (7) est prévue avec un dispositif de chauffe (8) supplémentaire.

12. Procédé selon l'une des revendications 8 à 11, **caractérisé en ce que** la distance entre les parois du ballon à pression (3) et la zone d'atomisation est déterminé, de sorte que les grains globulaires sont totalement solidifiés, avant qu'ils ne heurtent lesdites parois.

13. Dispositif selon la revendication 8 à 12, **caractérisé en ce que** l'on utilise du graphite, du carbure de silicium ou du verre quartzeux comme matériau non contaminant.

14. Procédé selon l'une des revendications 8 à 13, **caractérisé en ce que** le silicium est inséré au creuset de fonderie (4) chauffé par le biais d'une soupape solide (2).

15. Dispositif selon la revendication 8 à 14, **caractérisé en ce que** le fond du ballon à pression (3) est prévu avec un dispositif de déversement (13) pour la vidange du silicium ultra pur.

16. Dispositif selon la revendication 15, **caractérisé en ce que** l'on a une fermeture rotative en guise de dispositif de déversement (13).

17. Utilisation du produit, fabriqué conformément au procédé selon l'une des revendications 1 à 7 ou à l'aide du dispositif selon l'une des revendications 8 à 16, comme particules de semis pour la fabrication de silicium ultra pur à base de silane dans un lit fluidisé.
